# EUROPEAN PATENT SPECIFICATION

(11) **EP 4 516 639 B1**
(45) Date of publication and mention of the grant of the patent: **10.09.2025**
(21) Application number: 23194661.7
(22) Date of filing: 31.08.2023
(51) Int. Cl.: B62D 7/14, B60G 3/20, B62D 5/04, B62D 7/06, B60G 7/00, B62D 7/20

(54) **INDIVIDUALLY STEERABLE WHEEL SUSPENSION**
INDIVIDUELL LENKBARE RADAUFHÄNGUNG
SUSPENSION DE ROUE À DIRECTION INDIVIDUELLE

(43) Date of publication of application: 05.03.2025
(73) Proprietor: Technische Hochschule Ulm, 89075 Ulm (DE)
(72) Inventor: Schmitz, Thomas, 89075 Ulm (DE); Schmitz, Matthias, 45219 Essen (DE)
(74) Representative: Sonnenberg Harrison Partnerschaft mbB

(56) References cited:
- EP-A1- 1 426 203
- US-A1- 2023 234 415

## Description

### FIELD OF THE INVENTION

The field of the invention relates to a suspension for a vehicle and a vehicle with a suspension.

### BACKGROUND OF THE INVENTION

Numerous research activities on the subject of automated vehicles such as autonomous shuttle buses have emerged worldwide in the past decade against the backdrop of advancing urbanization. The objectives of these research activities are diverse, ranging from vehicle concepts to complex control algorithms for fully autonomous driving functions. One theme is the development of mobility concepts for the transportation of people and goods in limited spaces. Transport tasks in confined areas require a high degree of maneuverability which is enabled by a small turning radius. Novel vehicle and chassis concepts, such as individual suspensions, are required to meet the demand for a high degree of maneuverability.

The term "individual suspensions" refers to vehicle suspension systems in which wheels of the vehicle are independently controlled and operated. The wheels can be steered and driven separately, thereby enhancing maneuverability, stability, and ride comfort. Individual suspensions further allow for increased wheel steering angles compared to conventional vehicle suspensions and thus minimize turning radii. Applications of individual suspensions can be found not only in the domain of shuttle buses, but also in agricultural machinery. The boundaries between vehicle and robot merge in these applications.

A property of suspensions are the degrees of freedom of the wheel attached to the suspension. The term "degrees of freedom" in mechanical terms is defined as independent possibilities for movement. Conventional suspensions have, from a kinematic perspective, two degrees of freedom at corners of the vehicles. The first degree of freedom is the vertical movement of the wheel (jounce/rebound motion during suspension travel). The second degree of freedom is the rotation of the wheel relative to a wheel carrier of the suspension. The wheel steering angle is a third degree of freedom in the case of a steered suspension.

Driving torque in case of a driven conventional suspension can be generated centrally and distributed to the wheel via drive shafts and differentials. The vehicle can therefore be controlled through two control variables: the steering angle and the driving or braking torque.

The individual suspensions, also referred to as "Individual Corner Modules," do not have any kinematic coupling between the wheel steering angles or the wheel speeds / driving torque / braking torque of ones of the wheels of the vehicle. The individual suspensions can be individually steered and accelerated/decelerated using a steer-by-wire system and wheel hub motors. A maximum total of eight degrees of freedom is thus available for controlling the maneuvering of the vehicle, provided that the individual suspensions are used both on a front axle and a rear axle and that each of the individual wheels is driven.

The wheel vertical movement can be designed as a passive, semi-active, or active system, depending on the application. A semi-active system or an active system for controlling the vertical movement of the wheels can add a further control variable for controlling the vehicle.

The individually steerable suspensions can enhance the vehicle's maneuverability, especially when large wheel steering angles are possible and the individually steerable suspensions are used on both the front axle and the rear axle. Large wheel steering angles, however, only occur at low speeds. Space constraints known from the conventional vehicle suspensions, mainly caused by tie rods, result in a relatively small range of wheel steering angles. These space constraints can be eliminated with an individually steerable suspension.

Several high-level functional requirements at vehicle level and system level might need to be considered when developing the mobility concepts for the transportation of people and goods in confined spaces. Requirements for the individual suspension of the vehicle can be derived from the high-level functional requirements, such as high maneuverability and small turning radius. A further high-level functional requirement is an effective suspension design allowing to use an identical suspension module at all four wheels. Further high-level functional requirements are docile driving behavior, good ride comfort, efficient space concept for passenger and freight transport, and lightweight body structure achieved through optimized force transfer to a vehicle body.

System objectives for the chassis comprising the suspension of the vehicle can be derived from these high-level functional requirements. The system objectives can be maximization of wheel steering angles, effective support of lateral and longitudinal forces by avoiding a large lever arm of the wheel forces, low unsprung masses through a body-mounted steering actuator, compact wheel arch package, and kinematic and elastokinematic characteristics of a well-performing passive conventional suspension.

The term "unsprung mass" refers to the collective mass of components within the vehicle's suspension that are not supported by suspension springs. These components include the wheels, tires, brake assemblies, and certain parts of suspension linkage, typically located beneath the suspension springs. The unsprung mass directly interacts with the road surface and is influenced by irregularities in the road, impacting the ride, handling, and overall performance of the vehicle. Reducing the unsprung mass can enhance the suspension's ability to respond quickly to the irregularities in the road, resulting in enhanced ride comfort, enhanced tire adhesion, enhanced stability during maneuvers, and more effective braking. Reducing unsprung mass can therefore contribute to an overall enhanced driving experience.

Objectives for the suspension regarding kinematics and elastokinematics can further be derived from the aforementioned system objectives. The objectives regarding kinematics and elastokinematics can be negative camber during deflection (roll compensation), neutral roll understeer because the suspension is used on both the front axle and the rear axle (the steering actuator can additionally generate a superimposed toe angle if needed), defined roll center height, and kinematic wheel recession during deflection to reduce impacts on road irregularities. Further objectives regarding kinematics and elastokinematics can be a defined longitudinal wheel recession for improved ride comfort, small scrub radius for low reaction moments, toe-in during braking forces for improved driving stability, minimal change in track under lateral forces, and selectable location of longitudinal poles on the front axle and the rear axle.

The prior art discloses solutions for individual suspensions with modified topologies compared to conventional vehicle suspensions to maximize the wheel steering angles. The suspension in some prior art individual suspensions is pivoted at one point relative to the vehicle body, resulting in very large reaction torques at the bearing point between the suspension and the vehicle body. Other approaches attach the steering actuator to the knuckle, resulting in high unsprung masses.

Kraus, M.: Verschmelzung von Antrieb und Fahrwerk für einen People Mover. Automobiltechnische Zeitschrift 120 (2018) 7-8, pp. 48-53 describes a steerable individual suspension which is pivoted at one point relative to the vehicle body.

Hesse, L., Schwarz, B., Klein, M. u. Eckstein, L.: The wheel-individually steerable front axle of the research vehicle SpeedE. Fahrzeug- und Motorentechnik ; 1: (2013) describes a steerable individual suspension with a steering actuator which is attached to the knuckle.

US 2023/234415 A1 describes a wheel module including a knuckle configured to rotatably support a wheel, a steering device including an actuator configured to rotate the knuckle and steer the wheel, and a reinforcing structure provided between the knuckle and a vehicle body, wherein an output shaft of the actuator is disposed parallel to a vertical direction. The reinforcing structure includes a first end rotatably connected to the knuckle along a first axis parallel to the vertical direction and a second end connected to the vehicle body. A rotation axis of the output shaft and the first axis are coaxially provided. EP1426203 describes a suspension arrangement for a steerable vehicle wheel which suspension includes a first control arm having an inner end attached to the vehicle and pivotable around an axis substantially parallel to a longitudinal axis of the vehicle and an outer end pivotably connected to a wheel hub via a ball joint, and a further suspension member attached between the vehicle and the wheel hub and arranged to absorb and dampen vertical movement of said vehicle wheel, wherein the ball joint is arranged to be displaced a predetermined distance along an axis substantially transverse to the longitudinal axis of the vehicle, which distance is proportional to a vehicle wheel steering angle.

The prior art, however, does not disclose a suspension for maximizing wheel steering angles while avoiding large reaction torques and avoiding increased unsprung masses.

### SUMMARY OF THE INVENTION

The present invention solves the objective of maximizing wheel steering angles while avoiding large reaction torques and avoiding increased unsprung masses. This objective is solved by providing a suspension for a vehicle and a vehicle with a suspension.

The present document describes a suspension for a vehicle. The suspension comprises a first body to which a wheel of the vehicle can be rotatably attached and a second body which is rotatably attachable to a vehicle body of the vehicle. The second body is rotatable about a second rotation axis. The suspension further comprises an actuator which is operatively coupled to the second body. The actuator is for driving rotation of the second body about the second rotation axis. The suspension further comprises at least a first linkage element and a second linkage element. The first linkage element is movably attached to the first body and to the second body. The second linkage element is movably attached to the first body and to the second body. The first linkage element and the second linkage element commonly enable rotation of the first body about a first rotation axis in response to a rotation of the second body about the second rotation axis. The suspension further comprises a third linkage element movably attached to the first body and to the vehicle body. The first linkage element and the second linkage element are adapted to move in opposite directions to each other in response to the rotation of the second body.

Directional references used in this document refer to a first direction extending in a longitudinal direction of the vehicle, a second direction extending in a transverse direction of the vehicle and perpendicular to the first direction, and a third direction extending perpendicular to the first direction and perpendicular to the second direction. The longitudinal direction of the vehicle is synonymous with the direction of travel of the vehicle when driving straight ahead.

The present invention relates to a steerable suspension. The steering angle of the wheel can be adjusted by controlling the actuator. The actuator can initiate a steering movement by rotating the second body relative to the vehicle body. The second body and the first body are connected by the first linkage element and the second linkage element to transfer the rotation of the second body to the first body and to the wheel which is attached to the first body. In other words, the rotation of the second body causes the rotation of the first body and therefore the steering angle of the wheel can be adjusted by rotating the second body using the actuator.

The suspension enables good wheel suspension kinematics, the effective support of wheel forces and low unsprung masses. A maximum wheel steering angle of at least ±70° can be achieved.

The first linkage element and the second linkage are used in conventional suspensions to transfer forces applied to the wheel to a vehicle body of the vehicle. The first linkage element and the second linkage element of the present invention further initiate the rotation of the first body.

The components or devices described in this document as being attached, attachable, coupled, or connected to the vehicle body can alternatively or additionally be attached, attachable, coupled, or connected indirectly to the vehicle body via further components or devices such as, but not limited to a subframe.

The term "suspension" refers to a system designed to manage the interaction between the wheels of a vehicle and the vehicle's body or chassis. The suspension comprises components such as, bot not limited to, springs, dampers (shock absorbers), and linkage elements. A purpose of the suspension is to absorb and dissipate energy from irregularities in the road, including bumps, potholes, and uneven surfaces, thereby enhancing ride comfort and vehicle stability of the vehicle. The springs store and release energy to support the vehicle's weight and keep the wheels in contact with the road. The dampers control the oscillations of the springs, ensuring smooth and controlled wheel movements. The suspension enables ensuring predictable handling, minimizing body roll during cornering, and maintaining wheel contact with the road surface which is essential for optimal braking, steering, and overall vehicle performance.

The suspension further affects steering and wheel deflection. The steering is influenced by the suspension geometry, as changes in camber, toe, and caster angles can impact the contact patch of tires of the vehicle and the vehicle's handling characteristics. A well-designed suspension system ensures defined changes in camber, toe, and caster angles during cornering or when encountering road irregularities, providing predictable and responsive steering behavior.

The term "wheel deflection" refers to the vertical movement of the wheels during suspension compression and rebound. The suspension must effectively control the wheel deflection to maintain tire contact with the road, optimizing traction and braking performance. Proper management of the wheel deflection also prevents excessive body roll during cornering, promoting stability and control. The suspension's geometry and performance thus have a significant impact on the steering behavior and the wheel deflection, aspects that contribute to overall vehicle handling and safety of the vehicle.

The term "first body" refers to a component which comprises a wheel bearing rotatably supporting the wheel. The first body can be a knuckle, also known as a steering knuckle, or hub carrier. The knuckle connects the wheel to the remaining components of the suspension. The knuckle allows rotational movement of the wheel, enabling steering and facilitating the vertical wheel deflection in response to the road irregularities. The first body can rotate about the first rotation axis to adjust the steering angle of the wheel. The rotation of the first body about the first rotation axis represents a steering degree of freedom of the suspension. The orientation of the first rotation axis can change depending on wheel deflection and the steering angle. The first rotation axis can be a spatially variable screw axis.

The term "rotatably attached" refers to a connection between two components, wherein all degrees of freedom of movement of the two components relative to each other are restricted except for one single rotational degree of freedom.

The term "second body" refers to a component which can transfer forces from the wheel to the vehicle body and which can further initiate the rotation of the first body. The second body can rotate about the second rotation axis. The second rotation axis can be substantially vertical.

The term "rotatably attachable" refers to the capability of two components to be connected to each other to restrict all degrees of freedom of movement of the two components relative to each other except for one rotational degree of freedom. Forces in all three spatial dimension as well as torque in two spatial dimensions can be transferred between the two components and can therefore be supported by the rotatable attachment of the two components.

The term "actuator" refers to a device or component that converts energy, such as, but not limited to, electrical, pneumatic and hydraulic energy, into mechanical motion to induce movement in a system and control the displacement, position, or velocity of a component, thereby enabling dynamic actions or adjustments within a mechanical or automated system. The actuator can be an electric motor which is configured to rotate the second body about the second rotation axis and is further configured to precisely and reliably adjust the rotation position of the second body.

The term "operatively coupled" refers to a connection or linkage between two (or more) components or systems that allows the components or systems to interact and function together in a coordinated manner, enabling the transfer of forces, movements, signals, energy, or actions between the components or systems. The actuator is operatively coupled to the second body to enable the actuator to initiate and control the rotation of the second body about the second rotation axis. The actuator can be coupled to the second body directly or further components can be included in the force transmission path between the actuator and the second body.

The term "first linkage element" refers to a component connecting various ones of the components within a device or system to enable relative movement between the various components and the transmission of forces between the various components. The first linkage element can be a transverse control arm.

The first linkage element is movably attached to the first body and movably attached to the second body. The first linkage element can, for example, be movably attached to the first body using a joint configured to restrict the three translational degrees of freedom of the first linkage element with respect to the first body, such as, but not limited to a ball joint. The first body and the first linkage element can therefore transfer force from one to another while being able to perform relative movement with respect to each other. The first linkage element can, for example, be movably attached to the second body using a joint configured to restrict the three translational degrees of freedom of the first linkage element with respect to the second body, such as, but not limited to a ball joint.

The second body and the first linkage element can therefore transfer force from one to another while being able to perform relative movement with respect to each other. The first body and the second body can therefore transfer force from one to another using the first linkage element while being able to perform relative movement with respect to each other. The movement of the first body is coupled to the movement of the second body using the first linkage element. The first linkage element receives, inter alia, lateral forces substantially in the second direction from the first body and thus from the wheel and transmits the lateral forces to the vehicle body.

The term "second linkage element" refers to a component connecting various ones of the components within a device or system to enable relative movement between the various components and the transmission of forces between the various components. The second linkage element can be a transverse control arm.

The second linkage element is movably attached to the first body and movably attached to the second body. The second linkage element can, for example, be movably attached to the first body using a joint configured to restrict the three translational degrees of freedom of the second linkage element with respect to the first body, such as, but not limited to a ball joint. The first body and the second linkage element can therefore transfer force from one to another while being able to perform relative movement with respect to each other. The second linkage element can for example be movably attached to the second body using a joint configured to restrict the three translational degrees of freedom of the second linkage element with respect to the second body, such as, but not limited to a ball joint.

The second body and the second linkage element can therefore transfer force from one to another while being able to perform relative movement with respect to each other. The first body and the second body can therefore transfer force from one to another using the second linkage element while being able to perform relative movement with respect to each other. The movement of the first body is coupled to the movement of the second body using the second linkage element. The second linkage element receives, inter alia, lateral forces substantially in the second direction from the first body and thus from the wheel and transmits the lateral forces to the vehicle body.

The term "commonly enable rotation" refers to the capability of the first linkage element and the second linkage element to rotate the first body about the first rotation axis. The first linkage element and the second linkage element can rotate the first body by performing a relative movement to each other.

"In response to a rotation of the second body" means that the first linkage element and the second linkage element transfers a rotation of the second body about the second rotation axis to the first body. The rotation of the second body about the second rotation axis causes movement of the first linkage element and of the second linkage element. This movement of the first linkage element and of the second linkage element then causes rotation of the first body about the first rotation axis.

The term "third linkage element" refers to a component connecting various ones of the components within a device or system to enable relative movement between the various components and the transmission of forces between the various components. The third linkage element can be a trailing arm as known from conventional suspensions. The third linkage element can alternatively be an anti-roll bar.

The third linkage element is movably attached to the first body and movably attached to the vehicle body. The third linkage element can, for example, be movably attached to the first body using a joint configured to restrict the three translational degrees of freedom of the third linkage element with respect to the first body, such as, but not limited to a ball joint. The first body and the third linkage element can therefore transfer force from one to another while being able to perform relative movement with respect to each other. The third linkage element can for example be movably attached to the vehicle body using a joint configured to restrict the three translational degrees of freedom and at least one rotational degree of freedom of the third linkage element with respect to the vehicle body, such as, but not limited to a bush joint. The bush joint can be a rubber bearing with high cardanic stiffness to support torque resulting from the weight force of the third linkage element. An axial direction of the bush joint can be aligned with the second direction.

The vehicle body and the third linkage element can therefore transfer force from one to another while being able to perform relative movement with respect to each other. The first body and the vehicle body can therefore transfer force from one to another using the third linkage element while being able to perform relative movement with respect to each other. The end of the third linkage element which is coupled to the first body performs an approximately linear vertical movement due to the length of the third linkage element. The third linkage element therefore enables vertical guidance of the first body. The third linkage element receives longitudinal forces substantially in the first direction from the first body and thus from the wheel and transmits the longitudinal forces to the vehicle body. Supporting the longitudinal forces via the third linkage element reduces forces and torque which occur in remaining bearing points for coupling the suspension to the vehicle body, for example in bearing points for coupling the second body to the vehicle body. The reduced forces and the reduced torque in the bearing points enable a reduction in manufacturing costs and material costs.

The second body can be rotatably attachable to the vehicle body using two bearing points. The two bearing points can define the second rotation axis. The term "bearing point" refers to a component or location for providing support and enabling controlled movement or load transfer between two of the components. The two bearing points for rotatably attaching the second body to the vehicle body can, for example, be two ball bearings. Attaching the second body to the vehicle body via the two bearing points instead of only one single bearing point allows to reduce torque which needs to be supported in the bearing points. The mass of the second body does not contribute to the unsprung mass of the suspension due to the attachment to the vehicle body.

The second body and the first body can further move in coordinated relation with respect to each other in response to the rotation of the second body about the second rotation axis. The term "coordinated relation" means that there is a fixed coupling of a movement of the second body to a movement of the first body. Rotating the second body about the second rotation axis for a certain second angle results in a rotation of the first body about the first rotation axis for a certain corresponding first angle. The second angle and the first angle are in a non-linear, but defined, relationship to each other. The fixed ratio can be dependent on the respective value of the second angle. The first angle can thus be described as a function of the second angle.

The function describing the relationship between the second angle and the first angle depends, among other things, on the geometry of the first linkage element and of the second linkage element, of the locations where the first linkage element and the second linkage element are attached to the first body and to the second body, and of the orientation of the first rotation axis and the second rotation axis.

The actuator can further be attachable to the vehicle body. The mass of the actuator can be supported by the vehicle body by attaching the actuator to the vehicle body instead of attaching the actuator to any other component of the suspension. The mass of the actuator therefore does not contribute to the unsprung mass of the suspension.

The suspension can further comprise a spring-damper-element movably attached to the first body and attachable to the vehicle body. The term "spring-damper-element" refers to a component of the vehicle suspension comprising a spring and a damper with only two mounting points. The spring absorbs and stores energy as the vehicle encounters bumps and road irregularities, preventing sudden jolts. The damper, also known as a shock absorber, dissipates the stored energy gradually, controlling the oscillations and ensuring tires of the vehicle maintain good contact with the road for improved handling and stability of the vehicle. Together, the spring-damper element enhances comfort and safety by minimizing vibrations and maintaining optimal tire grip. The spring-damper element can further transmit forces substantially in the third direction from the first body to the vehicle body.

The spring-damper-element is movably attached to the first body using a ball joint. The location at which the spring-damper-element is movably attached to the first body can be located on or proximate to the first rotation axis. The location at which the spring-damper-element is movably attached to the first body can be one of two points defining the first rotation axis.

The spring-damper-element of the suspension can be a commonly known and broadly available spring-damper-elements as used in known double wishbone suspension or multi-link suspensions. The suspension can alternatively comprise a spring and a damper provided and attached to the first body and to the vehicle body separately from each other.

The spring-damper-element can alternatively be operatively coupled to the first body via a reversing kinematic system to utilize the space above the suspension more effectively.

The suspension can further comprise a transmission operatively coupling the actuator to the second body. The term "transmission" refers to a component or device for transmitting power and/or motion between different ones of the components or devices. The transmission may comprise gears, shafts, and other mechanical elements which enable the controlled transfer of, for example, rotational or translational force and speed, often allowing adjustments in torque and speed ratios to suit specific operational requirements.

Very high steering torques can occur at the wheel due to bore torque and steering return, particularly when steering while the vehicle is stationary. The transmission can therefore be a two-stage self-locking transmission comprising a worm gear stage and a spur gear stage. The worm is connected to a rotor of the actuator, while an output spur gear transmits torque to the second body (gear not necessarily self-locking).

The third linkage element can be a trailing arm with a shape to allow the wheel attached to the first body to rotate about the first rotation axis without contacting the third linkage element. Providing the third linkage element with such a shape allows the wheel to be moved over a wider steering angle range while still providing the advantage of the third linkage element by supporting longitudinal forces.

The third linkage element can have a curved shape adapted to provide enough free space to the wheel for allowing a wide steering angle range of up to at least ±70°.

The third linkage element can be movably attached to the first body in proximity to the first rotation axis. The location at which the third linkage element is movably attached to the first body can be located on or proximate to the first rotation axis. The location at which the third linkage element is movably attached to the first body can be one of two points defining the first rotation axis.

The suspension can further comprise a fourth linkage element and a fifth linkage element. The fourth linkage element can be movably attached to the first body and to the second body. The fifth linkage element can be movably attached to the first body and to the second body.

The terms "fourth linkage element" and "fifth linkage element" refer to a component connecting various components within a device or system to enable relative movement between the various components and the transmission of forces between the various components. The fourth linkage element and the fifth linkage element can be a transverse control arm, also known as a wishbone, as known from conventional suspensions.

The fourth linkage element can be movably attached to the first body and movably attached to the second body. The fourth linkage element can, for example, be movably attached to the first body using a joint configured to restrict the three translational degrees of freedom of the fourth linkage element with respect to the first body, such as, but not limited to, a ball joint. The first body and the fourth linkage element can therefore transfer force from one to another while being able to perform relative movement with respect to each other. The fourth linkage element can, for example, be movably attached to the second body using a joint configured to restrict the three translational degrees of freedom of the fourth linkage element with respect to the second body, such as, but not limited to a ball joint.

The second body and the fourth linkage element can therefore transfer force from one to another while being able to perform relative movement with respect to each other. The first body and the second body can therefore transfer force from one to another using the fourth linkage element while being able to perform relative movement with respect to each other. The movement of the first body can be coupled to the movement of the second body using the fourth linkage element. The fourth linkage element can receive, inter alia, lateral forces substantially in the second direction from the first body and thus from the wheel and can transmit the lateral forces to the vehicle body.

The fifth linkage element can be movably attached to the first body and movably attached to the second body. The fifth linkage element can, for example, be movably attached to the first body using a joint configured to restrict the three translational degrees of freedom of the fifth linkage element with respect to the first body, such as, but not limited to a ball joint. The first body and the fifth linkage element can therefore transfer force from one to another while being able to perform relative movement with respect to each other. The fifth linkage element can for example be movably attached to the second body using a joint configured to restrict the three translational degrees of freedom of the fifth linkage element with respect to the second body, such as, but not limited to a ball joint.

The second body and the fifth linkage element can therefore transfer force from one to another while being able to perform relative movement with respect to each other. The first body and the second body can therefore transfer force from one to another using the fifth linkage element while being able to perform relative movement with respect to each other. The movement of the first body can be coupled to the movement of the second body using the fifth linkage element. The fifth linkage element can receive, inter alia, lateral forces substantially in the second direction from the first body and thus from the wheel and can transmit the lateral forces to the vehicle body.

The first linkage element, the second linkage element, the fourth linkage element and the fifth linkage element can commonly enable rotation of the first body in response to a rotation of the second body, wherein the second body and the first body preferably move in a coordinated relation with respect to each other. The attachment of the fourth linkage element and the fifth linkage element to the second body simplifies the design of the suspension and of the vehicle body as no further bearing points for attaching the fourth linkage element and the fifth linkage element to the vehicle body are necessary.

The suspension can alternatively comprise a fourth linkage element and a fifth linkage element. The fourth linkage element can be movably attached to the first body and to the vehicle body. The fifth linkage element can be movably attached to the first body and to the vehicle body. Using the fourth linkage element and the fifth linkage element which are both attached to the vehicle body can allow simplifying the design of the second body, as the second body can be smaller in size.

"Fourth linkage element" and "fifth linkage element" alternatively refer to a component connecting various components within a device or system to enable relative movement between the various components and the transmission of forces between the various components. The fourth linkage element and the fifth linkage element can be a transverse control arm, also known as a wishbone, as known from conventional suspensions.

The fourth linkage element can be movably attached to the first body and movably attached to the vehicle body. The fourth linkage element can for example be movably attached to the first body using a joint configured to restrict the three translational degrees of freedom of the fourth linkage element with respect to the first body, such as, but not limited to a ball joint. The first body and the fourth linkage element can therefore transfer force from one to another while being able to perform relative movement with respect to each other. The fourth linkage element can, for example, be movably attached to the vehicle body using a joint configured to restrict the three translational degrees of freedom of the fourth linkage element with respect to the vehicle body, such as, but not limited to a ball joint.

The vehicle body and the fourth linkage element can therefore transfer force from one to another while being able to perform relative movement with respect to each other. The first body and the vehicle body can therefore transfer force from one to another using the fourth linkage element while being able to perform relative movement with respect to each other. The fourth linkage element can receive, inter alia, lateral forces substantially in the second direction from the first body and thus from the wheel and can transmit the lateral forces to the vehicle body.

The fifth linkage element can be movably attached to the first body and movably attached to the vehicle body. The fifth linkage element can, for example, be movably attached to the first body using a joint configured to restrict the three translational degrees of freedom of the fifth linkage element with respect to the first body, such as, but not limited to a ball joint. The first body and the fifth linkage element can therefore transfer force from one to another while being able to perform relative movement with respect to each other. The fifth linkage element can for example be movably attached to the vehicle body using a joint configured to restrict the three translational degrees of freedom of the fifth linkage element with respect to the vehicle body, such as, but not limited to a ball joint.

The vehicle body and the fifth linkage element can therefore transfer force from one to another while being able to perform relative movement with respect to each other. The first body and the vehicle body can therefore transfer force from one to another using the fifth linkage element while being able to perform relative movement with respect to each other. The fifth linkage element can receive, inter alia, lateral forces substantially in the second direction from the first body and thus from the wheel and can transmit the lateral forces to the vehicle body.

The suspension can alternatively comprise a fourth linkage element. The fourth linkage element can be a wishbone and can be movably attached to the first body and to the vehicle body. Using the fourth linkage element designed as a wishbone can allow simplifying the design of the first body, as one linkage element less needs to be movably attached to the first body.

The fourth linkage element can be movably attached to the first body and movably attached to the vehicle body. The fourth linkage element can for example be movably attached to the first body using a joint configured to restrict the three translational degrees of freedom of the fourth linkage element with respect to the first body, such as, but not limited to a ball joint. The first body and the fourth linkage element can therefore transfer force from one to another while being able to perform relative movement with respect to each other. The fourth linkage element can for example be movably attached to the vehicle body using two joints each configured to restrict the three translational degrees of freedom of the fourth linkage element with respect to the vehicle body, such as, but not limited to ball joints.

The vehicle body and the fourth linkage element can therefore transfer force and torque from one to another while being able to perform relative movement with respect to each other. The first body and the vehicle body can therefore transfer force from one to another using the fourth linkage element while being able to perform relative movement with respect to each other. The fourth linkage element can receive, inter alia, forces substantially in a plane comprising the first direction and the second direction from the first body and thus from the wheel and can transmit these forces to the vehicle body.

The present document further describes a vehicle. The vehicle comprises a first suspension as claimed in this document and a second suspension as claimed in this document. The vehicle further comprises a first wheel rotatably attached to the first suspension, a second wheel rotatably attached to the second suspension, and a drive unit.

The term "drive unit" refers to a component or system and comprise an engine, a transmission, and related components to generate, control, and transfer mechanical power from the engine to at least one wheel to drive the vehicle. The drive unit can be operatively coupled to one of the first wheel and the second wheel only and in this case the vehicle can comprise a further drive unit operatively coupled to the other one of the first wheel and the second wheel. The drive unit can alternatively be coupled to both the first wheel and the second wheel. The drive unit can alternatively or additionally be coupled to at least one further wheel of the vehicle. In case no drive unit is operatively coupled to the first suspension and the second suspension, the first suspension and the second suspension are nondriven.

The drive unit can comprise a first motor operatively coupled to the first wheel to drive the first wheel and a second motor operatively coupled to the second wheel to drive the second wheel. The drive unit can be provided in one housing or can be provided comprising more than one housing, for example as two wheel hub motors of which one hub motor is operatively coupled to the first wheel and the other hub motor is operatively coupled to the second wheel. The vehicle can therefore be controlled by the control variables steering angle and driving or braking torque for each of the first wheel and the second wheel individually. A maximum total of four degrees of freedom is thus available for controlling the vehicle maneuvers.

The vehicle can further comprise a third suspension as claimed in this document and a fourth suspension as claimed in this document. The vehicle can further comprise, a third wheel rotatably attached to the third suspension and a fourth wheel rotatably attached to the fourth suspension. The drive unit further comprises a third motor operatively coupled to the third wheel to drive the third wheel and a fourth motor operatively coupled to the fourth wheel to drive the fourth wheel. The vehicle can therefore be controlled by the control variables steering angle and driving or braking torque for each of the first wheel, the second wheel, the third wheel, and the fourth wheel individually. A maximum total of eight degrees of freedom is thus available for controlling the vehicle maneuvers.

### DESCRIPTION OF THE FIGURES

FIG. 1A shows a two-dimensional schematic top-view of a suspension according to a first aspect.
FIG. 1B shows a further two-dimensional schematic top-view of the suspension according to the first aspect.
FIG. 2 shows a perspective schematic view of the suspension according to the first aspect.
FIG. 3A shows a further perspective schematic view of the suspension according to the first aspect.
FIG. 3B shows a further perspective schematic view of the suspension according to the first aspect.
FIG. 3C shows a further perspective schematic view of the suspension according to the first aspect.
FIG. 4 shows a perspective schematic view of a suspension according to a second aspect.
FIG. 5 shows a perspective schematic view of a suspension according to a third aspect.
FIG. 6 shows a perspective view of the suspension according to the first aspect.
FIG. 7 shows a chart describing the operational behavior of the suspension.
FIG. 8 shows a further chart describing the operational behavior of the suspension.
FIG. 9 shows a further chart describing the operational behavior of the suspension.
FIG. 10 shows a further chart describing the operational behavior of the suspension.
FIG. 11 shows a further chart describing the operational behavior of the suspension.
FIG. 12 shows a further chart describing the operational behavior of the suspension.
FIG. 13 shows a further chart describing the operational behavior of the suspension.
FIG. 14 shows a vehicle.

### DETAILED DESCRIPTION OF THE INVENTION

The invention will now be described on the basis of the figures. It will be understood that the embodiments and aspects of the invention described herein are only examples and do not limit the protective scope of the claims in any way. The invention is defined by the claims. It will be understood that features of one aspect or embodiment of the invention can be combined with a feature of a different aspect or aspects and/or embodiments of the invention.

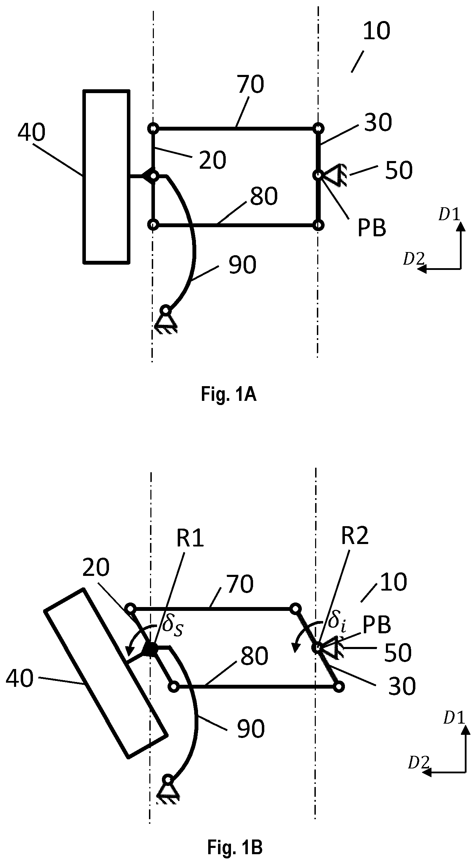

FIG. 1A shows a two-dimensional schematic top-view of a suspension 10 for a vehicle 100 according to a first aspect. A first direction D1 corresponds to a longitudinal direction of the vehicle 100 and a second direction D2 corresponds to a transverse direction of the vehicle 100 and is perpendicular to the first direction D1. The suspension 10 comprises a first body 20 to which a wheel 40 is rotatably attached. The suspension 10 further comprises a second body 30 which is movably attached to a vehicle body 50 at a bearing point PB.

A first linkage element 70 is movably attached to the first body 20 and is movably attached to the second body 30. A second linkage element 80 is movably attached to the first body 20 and is movably attached to the second body 30. The first body 20 and the second body 30 are therefore operatively coupled with each other via the first linkage element 70 and the second linkage element 80. The suspension further comprises a third linkage element 90 which is movably connected to the first body and movably connected to the vehicle body 50.

FIG. 1B shows a further two-dimensional schematic top-view of the suspension 10 according to the first aspect. The second body 30 is rotated by an actuating angle δ_{A} about a second rotation axis R2 and the first body is rotated by a steering angle δ_{S} about a first rotation axis R1. The rotation of the second body 30 is transferred to the first body 20 via the first linkage element 70 and the second linkage element 80. The first linkage element 70 and the second linkage element 80 move in opposite directions to each other in response to the rotation of the second body 30 and thus transfer the movement of the second body 30 to the first body 20.

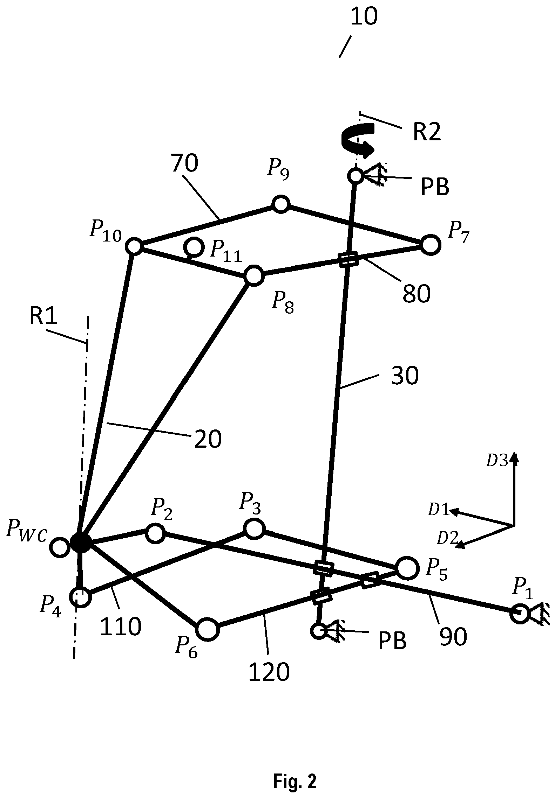

FIG. 2 shows a perspective schematic view of the suspension 10 according to the first aspect. FIG. 2 shows the suspension 10 in a situation where the vehicle 100 is in standstill. The suspension 10 further comprises a fourth linkage element 110 and a fifth linkage element 120. The fourth linkage element 110 is movably attached to the first body 20 at a point P4 and is movably attached to the second body 30 at a point P3. The fifth linkage element 120 is movably attached to the first body 20 at a point P6 and is movably attached to the second body 30 at a point P5.

The first linkage element 70 is movably attached to the first body 20 at a point P10 and is movably attached to the second body 30 at a point P9. The second linkage element 80 is movably attached to the first body 20 at a point P8 and is movably attached to the second body 30 at a point P7.

The first linkage element 70, the second linkage element 80, the fourth linkage element 110, and the fifth linkage element 120 are oriented in a plane defined by the first direction D1 and the second direction D2 and are inclined with respect to the second direction D2 by an angle of approx. 3°. The first linkage element 70 and the second linkage element 80 are inclined with respect to the second direction D2 in opposite directions to allow the first linkage element 70 and the second linkage element 80 in conjunction to also transfer longitudinal forces (forces in the first direction D1) from the wheel via the first body 20 and via the second body 30 to the vehicle body 50.

The fourth linkage element 110 and the fifth linkage element 120 are also inclined with respect to the second direction D2 in opposite directions to allow the fourth linkage element 110 and the fifth linkage element 120 in conjunction to also transfer longitudinal forces (forces in the first direction D1) from the wheel via the first body 20 and via the second body 30 to the vehicle body 50. In other words, the distance between the points P4 and P6 differs from the distance between the points P3 and P5. The first linkage element 70, the second linkage element 80, the fourth linkage element 110, and the fifth linkage element 120 can thus not only support lateral forces (in the second direction D2) but can also support longitudinal forces.

The first linkage element 70, the second linkage element 80, the fourth linkage element 110, and the fifth linkage element 120 have substantially the same length and are symmetrically aligned to the center of the wheel 40, seen in direction D3.

The third linkage element 90 is movably attached to the first body 20 at a point P2 and is movably attached to the vehicle body 50 at a point P1. The wheel 40 (not depicted) is rotatably attached to the first body 20 at a point PWC. The second body 30 is movably attached to the vehicle body 50 at the two bearing points PB. The two bearing points PB define the second rotation axis R2.

A spring-damper-element 150 (not depicted) is movably attached to the first body 20 at a point P11. Spring-damper forces from the spring-damper-element 150 are thus transferred to the first body 20 at the point P11. The point P11 is positioned to be on or proximate to the first rotation axis R1 to minimize a reaction between the rotation of the first body 20 about the first rotation axis R1 and the spring-damper forces of the spring-damper-element 150 for reasons of ride comfort.

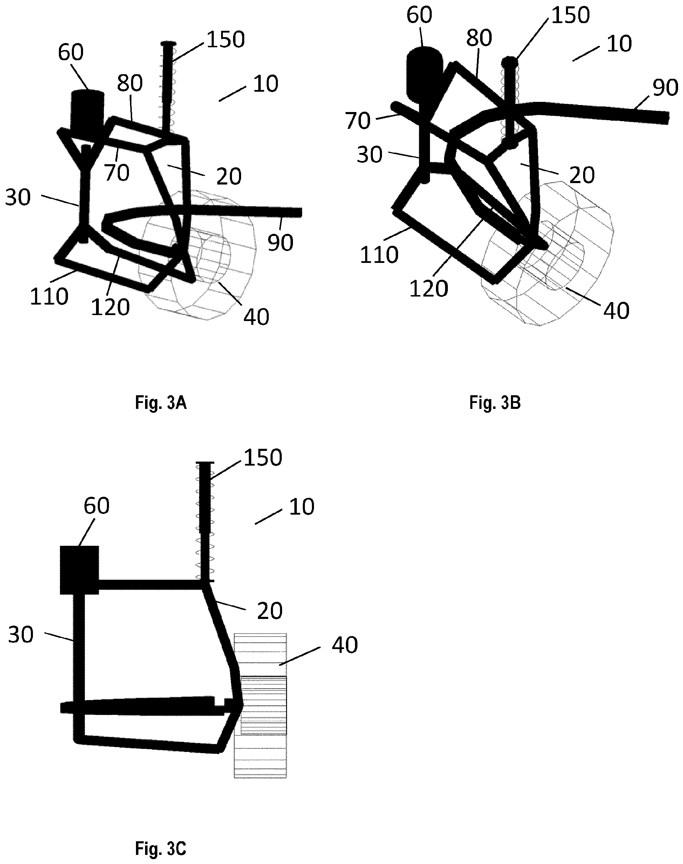

FIG. 3A shows a further perspective schematic view of the suspension 10 according to the first aspect. The spring-damper-element 150 is movably attached to the first body 20. An actuator 60 is connected to the second body 30 to rotate the second body 30 about the second rotation axis R2. The third link 90 has a curved shape to provide enough space for the wheel 40 to move while steering, i.e., when the first body 20 is rotated about the first rotation axis R1.

FIG. 3B and FIG. 3C show further perspective schematic views of the suspension 10 according to the first aspect. The third link 90 is substantially oriented in a plane defined by the first direction D1 and the second direction D2.

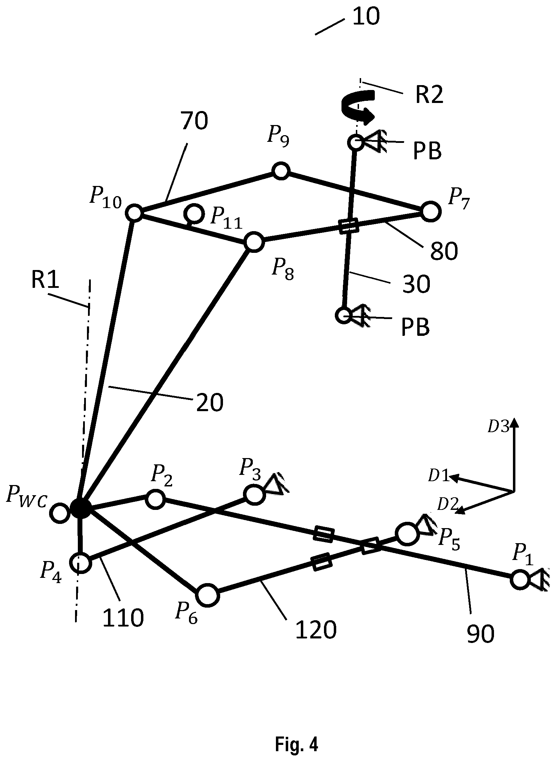

FIG. 4 shows a perspective schematic view of a suspension 10 according to a second aspect. FIG. 4 shows the suspension 10 in a situation where the vehicle 100 is in a standstill position. The suspension 10 further comprises a fourth linkage element 110 and a fifth linkage element 120. The fourth linkage element 110 is movably attached to the first body 20 at a point P4 and is movably attached to the vehicle body 50 at a point P3. The fifth linkage element 120 is movably attached to the first body 20 at a point P6 and is movably attached to the vehicle body 50 at a point P5.

The first linkage element 70 is movably attached to the first body 20 at a point P10 and is movably attached to the second body 30 at a point P9. The second linkage element 80 is movably attached to the first body 20 at a point P8 and is movably attached to the second body 30 at a point P7.

The first linkage element 70, the second linkage element 80, the fourth linkage element 110, and the fifth linkage element 120 are oriented in a plane defined by the first direction D1 and the second direction D2 and are inclined with respect to the second direction D2 by an angle of approx. 3°. The first linkage element 70 and the second linkage element 80 are inclined with respect to the second direction D2 in opposite directions to allow the first linkage element 70 and the second linkage element 80 in conjunction to also transfer longitudinal forces (forces in the first direction D1) from the wheel via the first body 20 and via the second body 30 to the vehicle body 50.

The fourth linkage element 110 and the fifth linkage element 120 are also inclined with respect to the second direction D2 in opposite directions to allow the fourth linkage element 110 and the fifth linkage element 120 in conjunction to also transfer longitudinal forces (forces in the first direction D1) from the wheel via the first body 20 to the vehicle body 50. In other words, the distance between the points P4 and P6 differs from the distance between the points P3 and P5. The first linkage element 70, the second linkage element 80, the fourth linkage element 110, and the fifth linkage element 120 can thus not only support lateral forces (in the second direction D2) but can also support longitudinal forces.

The first linkage element 70 and the second linkage element 80 have substantially the same length and are symmetrically aligned to the center of the wheel 40, seen in direction D3. Further the fourth linkage element 110 and the fifth linkage element 120 have the same length and are symmetrically aligned to the center of the wheel 40, seen in direction D3.

The third linkage element 90 is movably attached to the first body 20 at a point P2 and is movably attached to the vehicle body 50 at a point P1. The wheel 40 (not depicted) is rotatably attached to the first body 20 at a point PWC. The second body 30 is movably attached to the vehicle body 50 at the two bearing points PB. The two bearing points PB define the second rotation axis R2.

A spring-damper-element 150 (not depicted) is movably attached to the first body 20 at a point P11. Spring-damper forces from the spring-damper-element 150 are thus transferred to the first body 20 at the point P11. The point P11 is positioned to be on or proximate to the first rotation axis R1 to minimize a reaction between the rotation of the first body 20 about the first rotation axis R1 and the spring-damper forces of the spring-damper-element 150 for reasons of ride comfort.

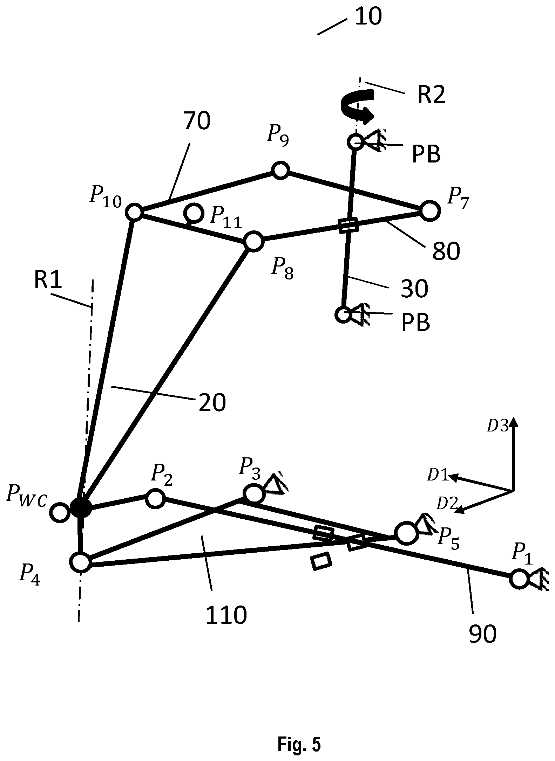

FIG. 5 shows a perspective schematic view of a suspension 10 according to a third aspect. FIG. 5 shows the suspension 10 in a situation where the vehicle 100 is in a standstill position. The suspension 10 further comprises a fourth linkage element 110. The fourth linkage element 110 is movably attached to the first body 20 at a point P4 and is movably attached to the vehicle body 50 at a point P3 and at a point P5. The point P4 is positioned to be on the first rotation axis R1.

The first linkage element 70 is movably attached to the first body 20 at a point P10 and is movably attached to the second body 30 at a point P9. The second linkage element 80 is movably attached to the first body 20 at a point P8 and is movably attached to the second body 30 at a point P7.

The first linkage element 70, the second linkage element 80, and the fourth linkage element 110 are oriented in a plane defined by the first direction D1 and the second direction D2. The first linkage element 70 and the second linkage element 80 are inclined with respect to the second direction D2 by an angle of approx. 3°. The first linkage element 70 and the second linkage element 80 are inclined with respect to the second direction D2 in opposite directions to allow the first linkage element 70 and the second linkage element 80 in conjunction to also transfer longitudinal forces (forces in the first direction D1) from the wheel via the first body 20 and via the second body 30 to the vehicle body 50.

The fourth linkage element 110 is able to also transfer longitudinal forces (forces in the first direction D1) from the wheel via the first body 20 to the vehicle body 50. The first linkage element 70, the second linkage element 80, and the fourth linkage element 110 can thus not only support lateral forces (in the second direction D2) but can also support longitudinal forces.

The first linkage element 70 and the second linkage element 80 have substantially the same length and are symmetrically aligned to the center of the wheel 40, seen in direction D3. Further the fourth linkage element 110 is symmetrically to the center of the wheel 40, seen in direction D3.

The third linkage element 90 is movably attached to the first body 20 at a point P2 and is movably attached to the vehicle body 50 at a point P1. The wheel 40 (not depicted) is rotatably attached to the first body 20 at a point PWC. The second body 30 is movably attached to the vehicle body 50 at the two bearing points PB. The two bearing points PB define the second rotation axis R2.

A spring-damper-element 150 (not depicted) is movably attached to the first body 20 at a point P11. Spring-damper forces from the spring-damper-element 150 are thus transferred to the first body 20 at the point P11. The point P11 is positioned to be on or proximate to the first rotation axis R1 to minimize a reaction between the rotation of the first body 20 about the first rotation axis R1 and the spring-damper forces of the spring-damper-element 150 for reasons of ride comfort.

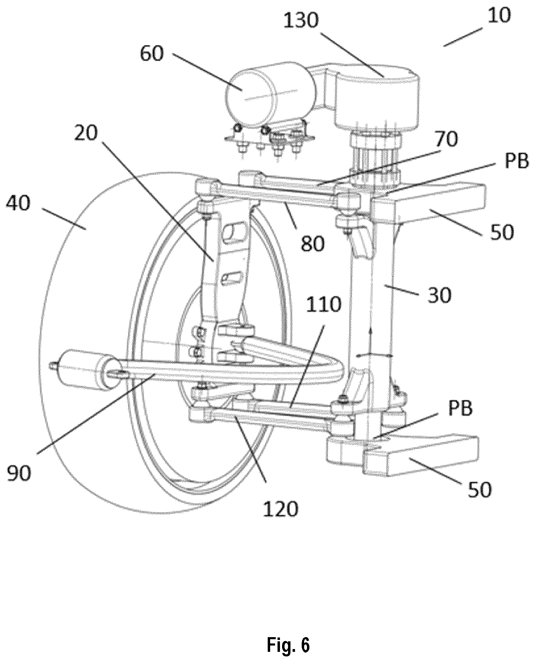

FIG. 6 shows a perspective view of the suspension 10 according to the first aspect. The first linkage element 70, the second linkage element 80, the fourth linkage element 110, and the fifth linkage element 120 are transverse control arms with substantially identical dimensions. The lower linkage elements, i.e. the fourth linkage element 110 and the fifth linkage element 120, are slightly longer dimensioned. The third linkage element 90 is a trailing arm with a curved shaped. The first linkage element 70, the second linkage element 80, the fourth linkage element 110, the fifth linkage element 120, and the third linkage element 90 are made of aluminum but can alternatively be made of a different metal, such as steel, or other materials, such as fiber-reinforced plastics.

The first body 20 is for example a planar body substantially slightly inclined relative to a plane defined by the first direction D1 and the third direction D3. The wheel 40 is rotatably attached to the first body 20 using a rolling bearing. The first linkage element 70, the second linkage element 80, the fourth linkage element 110, the fifth linkage element 120, and the third linkage element 90 are each movably attached to the first body 20 using respective ball joints. The ball of each of the respective ball joints is mounted to the first body 20. Each of the first linkage element 70, the second linkage element 80, the fourth linkage element 110, the fifth linkage element 120, and the third linkage element 90 comprise a socket corresponding to the ball of the respective ball joint. The first body 20 is made of aluminum but can alternatively be made of a different metal, such as steel, or other materials, such as fiber-reinforced plastics.

The second body 30 is a planar body substantially oriented in a plane defined by the first direction D1 and the third direction D3. The first linkage element 70, the second linkage element 80, the fourth linkage element 110, and the fifth linkage element 120 are each movably attached to the second body 30 using respective ball joints. The ball of each of the respective ball joints is mounted to the second body 30. Each of the first linkage element 70, the second linkage element 80, the fourth linkage element 110, and the fifth linkage element 120 comprise a socket corresponding to the ball of the respective ball joint. The second body 30 is made of aluminum but can alternatively be made of a different metal, such as steel, or other materials, such as fiber-reinforced plastics. The second body 30 is movably attached to the vehicle body 50 at the two bearing points PB using two rolling bearings.

The actuator is attached to the vehicle body 50 using for example four screws. The actuator 60 is an electric motor and is operatively coupled to the second body 30 via the transmission 130 to rotate the second body 30 about the second rotation axis R2. The transmission 130 is a two-stage self-locking transmission comprising a worm gear stage and a spur gear stage. The worm is connected to a rotor of the actuator, while an output spur gear of the spur gear stage transmits torque to the second body to rotate the second body about the second rotation axis R2.

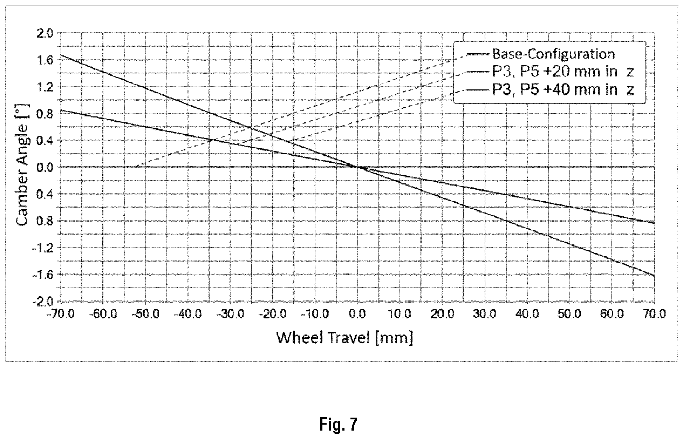

FIG. 7 shows a chart describing the operational behavior of the suspension 10. The chart shows the progression of the camber angle over the wheel travel for a basic configuration and for two variants with points P3 and P5 shifted by different values in the third direction D3 in each case. The basic configuration of the suspension 10 allows for a neutral camber angle behavior, the camber angle being independent of the wheel travel. The dependence of the camber angle from the wheel travel increases the farther the points P3 and P5 are shifted upwards in the third direction D3. A negative camber angle during jounce is desirable, to increase the transmissible lateral forces during cornering. A negative camber angle during jounce can be achieved by lowering the points P7 and P9 or by raising the P3 and P5 (as shown in Fig. 7), as with a conventional multilink axle.

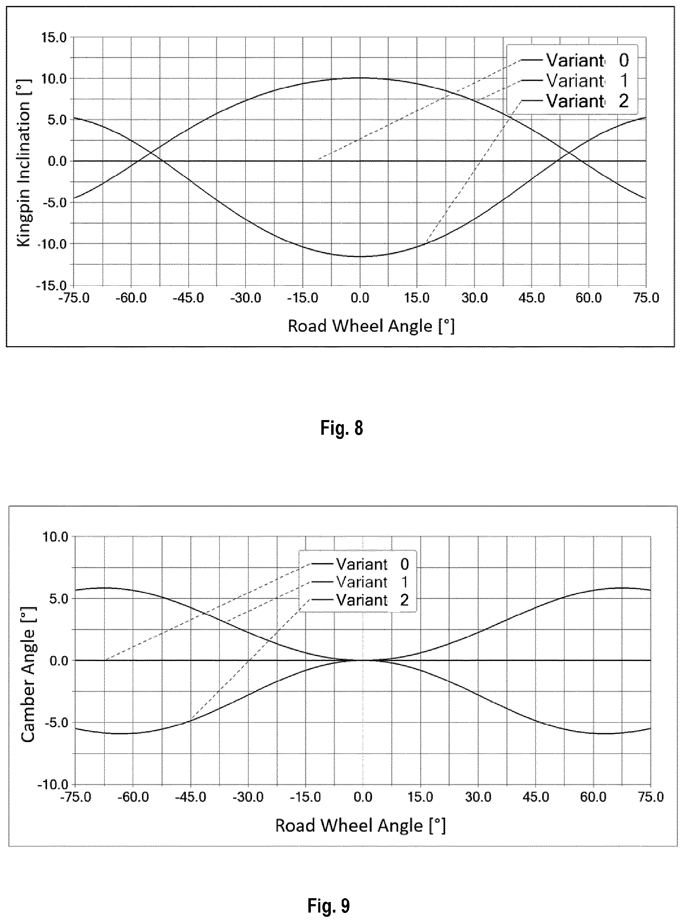

FIG. 8 and FIG. 9 show further charts describing the operational behavior of the suspension 10. The curves of the kingpin angle as a function of the steering angle δ_{S} is shown in FIG. 8 and the camber angle as a function of the steering angle δ_{S} is shown in FIG. 9 for different configurations. The kingpin axis cannot be determined geometrically, but is defined as the instantaneous screw axis of the knuckle during a steering movement, as in the case of a multi-link axis. The velocity vector and angular velocity vector of the body are parallel to each other for any point on the screw axis. The screw axis for a steering angle δ_{S}=0° runs vertically through the center points of the lines P8-P10, or P4-P6 (variant 0 in FIG. 8 and FIG. 9: kingpin angle σ=0°), for the symmetrical suspension 10. The relative length of the line P8-P10 to the relative length of the line P4-P6 as seen in direction D1 can be used to specifically influence the instantaneous screw axis and thus the kingpin angle. The result is an inwardly inclined kingpin axis (variant 1 in FIG.8 and FIG. 9: in which the kingpin angle σ>0°) if the length of the line P8-P10 is smaller than the length of the line P4-P6, and in the opposite case an outwardly inclined kingpin axis (variant 2 in FIG.8 and FIG. 9: in which the kingpin angle σ<0°). A positive kingpin angle (σ>0°) causes the wheel to turn into positive camber during steering which is typical for conventional suspension, e.g. with the double wishbone axle.

Drive torque in conventional vehicles 100 is not introduced into the vehicle body 50 via the suspension 10, but via an engine mount. Both the drive torque and braking torque act on the suspension 10, in the case of wheel hub motors. The scrub radius of the suspension 10 is therefore the determining lever arm for the reaction torques. The connection points to the first body 20 are relatively far from the center of the wheel 40 since a wheel hub motor occupies the installation space inside a rim of the wheel 40. A positive kingpin angle reduces the scrub radius. The kingpin angle can be increased further without affecting the disturbance force lever arm by moving the upper outer attachment points (P8, P10) in the second direction D2 towards the center of the vehicle 100 and the lower outer attachment points (P4, P6) in the second direction D2 away from the center of the vehicle 100, in addition to the possibility of adjusting the kingpin angle mentioned above. The scrub radius can be reduced with these measures from 120 mm in the base configuration of the suspension 10 to 31 mm.

No caster angle is provided, in order to be able to use the identical suspension 10 for all four wheels of the vehicle 100. Self-aligning torques therefore result exclusively from the trail of the tires. The self-aligning torques are not transmitted to the rotor of the actuator 60, but are supported on the vehicle body 50 via a housing of the transmission 130, due to the self-locking steering transmission 130.

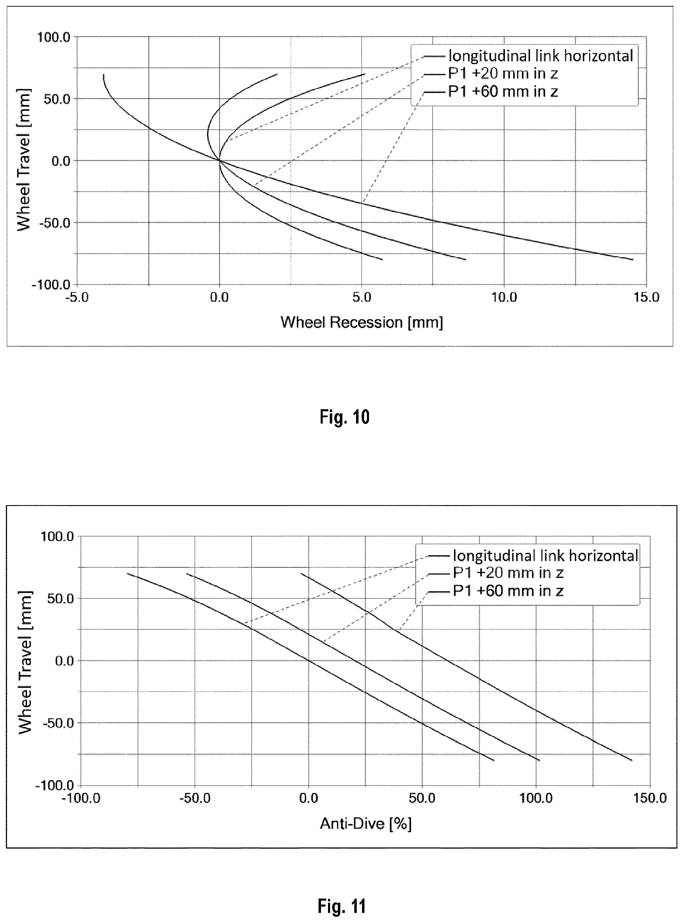

FIGS. 10 and 11 show further charts describing the operational behavior of the suspension 10. The longitudinal poles of the suspension 10 can be defined via the vertical position of the bearing point (P1) of the third linkage element 90 on the vehicle body 50. The position of the longitudinal pole defines on the one hand the brake/startup anti-dive-angle (as shown in Fig. 11) and on the other hand the wheel recession during deflection as shown in FIG. 10. The point P1 is positioned lower in the third direction D3 on the front axle than on the rear axle of the vehicle 100 since the support angle and wheel recession on the front axle of the vehicle 100 are in conflict.

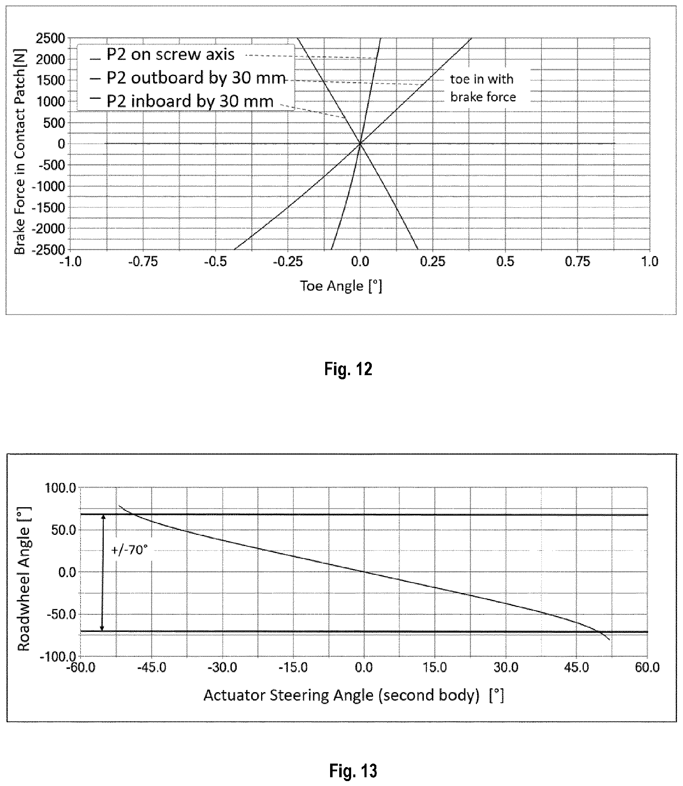

FIG. 12 shows a further chart describing the operational behavior of the suspension 10. The attachment of the first linkage element 70, the second linkage element 80, the fourth linkage element 110, and the fifth linkage element 120 with ball joints and the low caster result in only very small elastokinematic track changes under lateral forces. The dynamic driving condition can also be intervened in by appropriate control of the four wheel steering angles (toe angles). The change of the toe angle under longitudinal forces can be influenced by the lateral position (in the second direction D2) of the attachment point (P2) of the third linkage element 90 on the first body, as shown in FIG. 12. The change of the toe angle under longitudinal forces is minimal if the point P2 is located on the screw axis. Toe-out under braking force results if the point P2 is shifted in the second direction D2 towards the center of the vehicle 100. Shifting the point P2 in the second direction D2 away from the center of the vehicle 100 results in toe-in. Toe-in is desirable for braking stability under µ-split conditions. The point P1 can be mounted with a soft bushing in the longitudinal direction of the vehicle (first direction D1) in accordance with the requirements for rolling comfort and road noise.

FIG. 13 shows a further chart describing the operational behavior of the suspension 10. A usable steering angle range of up to approx. +/-70° can be achieved with the geometry of the suspension 10, as shown in FIG. 13. The transmission of the rotational motion between the second body 30 and the wheel 40 is linear in the range up to about +/-65°. Steering torques increase progressively, as the first linkage element 70, the second linkage element 80, the fourth linkage element 110, and the fifth linkage element 120 approach a stretch position. The stretch position is reached at a wheel steering angle of about +/- 75°. The wheel steering angle range of approx. +/-70° that can be realized with the suspension 10 is sufficient for many vehicle applications since turning the vehicle on the spot is possible and maneuverability is significantly improved compared with a conventional suspension.

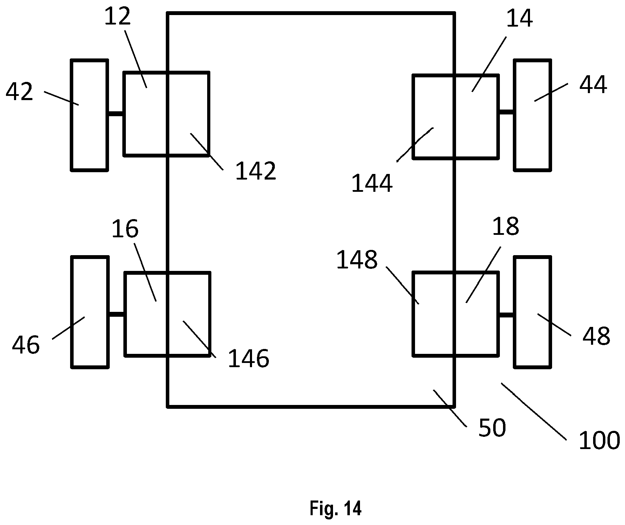

FIG. 14 shows a vehicle 100. The vehicle 100 comprises a first suspension 12, a second suspension 14, a third suspension 16, and a fourth suspension 18. The first suspension 12, the second suspension 14, the third suspension 16, and the fourth suspension 18 are attached to a vehicle body 50 of the vehicle 100. A first wheel 42 is attached to the first suspension 12, a second wheel 44 is attached to the second suspension 14, a third wheel 46 is attached to the third suspension 16, and a fourth wheel 48 is attached to the fourth suspension 18.

The vehicle further comprises a drive unit 140 comprising a first motor 142 to drive the first wheel 42, a second motor 144 to drive the second wheel 44, a third motor 146 to drive the third wheel 46 and a fourth motor 148 to drive the fourth motor 48.

The first suspension 12 and the second suspension 14 are arranged at the front axle of the vehicle 100 and the third suspension 16 and the fourth suspension 18 are arranged at the rear axle of the vehicle 100.

### Reference numerals

- 10: Suspension
- 12: First suspension
- 14: Second suspension
- 16: Third suspension
- 18: Fourth suspension
- 20: First body
- 30: Second body
- 40: Wheel
- 42: First wheel
- 44: Second wheel
- 46: Third wheel
- 48: Fourth wheel
- 50: Vehicle body
- 60: Actuator
- 70: First linkage element
- 80: Second linkage element
- 90: Third linkage element
- 100: Vehicle
- 110: Fourth linkage element
- 120: Fifth linkage element
- 130: Transmission
- 140: Drive unit
- 142: First motor
- 144: Second motor
- 146: Third motor
- 148: Fourth motor
- 150: Spring-damper-element
- δ_{A}: Actuating angle
- δ_{S}: Steering angle
- D1: First direction
- D2: Second direction
- D3: Third direction
- P1: Point
- P2: Point
- P3: Point
- P4: Point
- P5: Point
- P6: Point
- P7: Point
- P8: Point
- P9: Point
- P10: Point
- P11: Point
- PB: Bearing point
- PWC: Point
- R1: First rotation axis
- R2: Second rotation axis

## Claims

1. A suspension (10) for a vehicle (100), the suspension (10) comprising:
a first body (20) to which a wheel (40) of the vehicle (100) can be rotatably attached;
a second body (30) rotatably attachable to a vehicle body (50) of the vehicle (100), wherein the second body (30) is rotatable about a second rotation axis (R2);
an actuator (60), operatively coupled to the second body (30), for driving rotation of the second body (30) about the second rotation axis (R2);
at least a first linkage element (70) and a second linkage element (80), wherein the first linkage element (70) is movably attached to the first body (20) and to the second body (30), wherein the second linkage element (80) is movably attached to the first body (20) and to the second body (30), and wherein the first linkage element (70) and the second linkage element (80) commonly enable rotation of the first body (20) about a first rotation axis (R1) in response to a rotation of the second body (30) about the second rotation axis (R2); and
a third linkage element (90) movably attached to the first body (20) and to the vehicle body (50); **characterised in that**
the first linkage element (70) and the second linkage element (80) are adapted to move in opposite directions to each other in response to the rotation of the second body (30).

2. The suspension (10) according to claim 1, wherein the second body (30) is rotatably attachable to the vehicle body (50) using two bearing points (PB), wherein the two bearing points (PB) define the second rotation axis (R2).

3. The suspension (10) according to claim 1, wherein the second body (30) and the first body (20) move in coordinated relation with respect to each other in response to the rotation of the second body (20) about the second rotation axis (R2).

4. The suspension (10) according to one of the preceding claims, wherein the actuator (60) is attachable to the vehicle body (50).

5. The suspension (10) according to one of the preceding claims, further comprising a spring-damper-element (150) movably attached to the first body (20) and attachable to the vehicle body (50).

6. The suspension (10) according to one of the preceding claims, further comprising a transmission (130) operatively coupling the actuator (60) to the second body (30).

7. The suspension (10) according to one of the preceding claims, wherein the third linkage element (90) is a trailing arm with a shape to allow the wheel (40) attached to the first body (20) to rotate about the first rotation axis (R1) without contacting the third linkage element (90).

8. The suspension (10) according to one of the preceding claims, wherein the third linkage element (90) has a curved shape.

9. The suspension (10) according to one of the preceding claims, wherein the third linkage element (90) is movably attached to the first body (20) in proximity to the first rotation axis (R1).

10. The suspension (10) according to one of the preceding claims, further comprising a fourth linkage element (110) and a fifth linkage element (120), wherein the fourth linkage element (110) is movably attached to the first body (20) and to the second body (30), and wherein the fifth linkage element (120) is movably attached to the first body (20) and to the second body (30).

11. The suspension (10) according to one of the preceding claims, further comprising a fourth linkage element (110) and a fifth linkage element (120), wherein the fourth linkage element (110) is movably attached to the first body (20) and to the vehicle body (50), and wherein the fifth linkage element (120) is movably attached to the first body (20) and to the vehicle body (50).

12. The suspension (10) according to one of the claims 1 to 9, further comprising a fourth linkage element (110), wherein the fourth linkage element (110) is a wishbone and is movably attached to the first body (20) and to the vehicle body (50).

13. A vehicle (100) comprising:
a first suspension (12) according to one of the claims 1 to 12;
a second suspension (14) according to one of the claims 1 to 12;
a first wheel (42) rotatably attached to the first suspension (12);
a second wheel (43) rotatably attached to the second suspension (14); and
a drive unit (140).

14. The vehicle (100) of claim 13, wherein the drive unit (140) comprises:
a first motor (142) operatively coupled to the first wheel (42) to drive the first wheel (42); and
a second motor (144) operatively coupled to the second wheel (44) to drive the second wheel (44).

15. The vehicle (100) of claim 13 or 14, further comprising
a third suspension (16) according to one of the claims 1 to 12;
a fourth suspension (18) according to one of the claims 1 to 12;
a third wheel (46) rotatably attached to the third suspension (16); and
a fourth wheel (48) rotatably attached to the fourth suspension (18); wherein the drive unit (140) further comprises
a third motor (146) operatively coupled to the third wheel (46) to drive the third wheel (46); and
a fourth motor (148) operatively coupled to the fourth wheel (48) to drive the fourth wheel (48).

## Patentansprüche

1. Aufhängung (10) für ein Fahrzeug (100), die Aufhängung (10) umfassend:
einen ersten Körper (20), an dem ein Rad (40) des Fahrzeugs (100) drehbar befestigt werden kann;
einen zweiten Körper (30), drehbar befestigbar an einem Fahrzeugkörper (50) des Fahrzeugs (100), wobei der zweite Körper (30) um eine zweite Drehachse (R2) drehbar ist;
einen Aktuator (60), betriebsfähig mit dem zweiten Körper (30) gekoppelt, um eine Drehung des zweiten Körpers (30) um die zweite Drehachse (R2) anzutreiben;
mindestens ein erstes Verbindungselement (70) und ein zweites Verbindungselement (80), wobei das erste Verbindungselement (70) beweglich an dem ersten Körper (20) und an dem zweiten Körper (30) befestigt ist, wobei das zweite Verbindungselement (80) beweglich an dem ersten Körper (20) und an dem zweiten Körper (30) befestigt ist, und das erste Verbindungselement (70) und das zweite Verbindungselement (80) gemeinsam ermöglichend eine Drehung des ersten Körpers (20) um eine erste Drehachse (R1) als Reaktion auf eine Drehung des zweiten Körpers (30) um die zweite Drehachse (R2); und
ein drittes Verbindungselement (90), beweglich an dem ersten Körper (20) und an dem Fahrzeugkörper (50) befestigt;
**dadurch gekennzeichnet, dass**
das erste Verbindungselement (70) und das zweite Verbindungselement (80) angepasst sind, um sich als Reaktion auf die Drehung des zweiten Körpers (30) in entgegengesetzte Richtungen zueinander zu bewegen.

2. Aufhängung (10) nach Anspruch 1, wobei der zweite Körper (30) unter Verwendung von zwei Lagerpunkten (PB) drehbar an dem Fahrzeugkörper (50) befestigt werden kann, die zwei Lagerpunkte (PB) definierend die zweite Drehachse (R2).

3. Aufhängung (10) nach Anspruch 1, wobei sich der zweite Körper (30) und der erste Körper (20) als Reaktion auf die Drehung des zweiten Körpers (20) um die zweite Drehachse (R2) in einer koordinierten Beziehung zueinander bewegen.

4. Aufhängung (10) nach einem der vorhergehenden Ansprüche, wobei der Aktuator (60) an dem Fahrzeugkörper (50) befestigt werden kann.

5. Aufhängung (10) nach einem der vorhergehenden Ansprüche, ferner umfassend ein beweglich an dem ersten Körper (20) befestigtes und an dem Fahrzeugkörper (50) befestigbares Feder-Dämpfer-Element (150).

6. Aufhängung (10) nach einem der vorhergehenden Ansprüche, ferner umfassend ein Getriebe (130), betriebsfähig koppelnd den Aktuator (60) mit dem zweiten Körper (30).

7. Aufhängung (10) nach einem der vorhergehenden Ansprüche, wobei das dritte Verbindungselement (90) ein Längslenker mit einer Form ist, um es dem an dem ersten Körper (20) befestigten Rad (40) zu ermöglichen, sich um die erste Drehachse (R1) zu drehen, ohne das dritte Verbindungselement (90) zu berühren.

8. Aufhängung (10) nach einem der vorhergehenden Ansprüche, das dritte Verbindungselement (90) aufweisend eine gekrümmte Form.

9. Aufhängung (10) nach einem der vorhergehenden Ansprüche, wobei das dritte Verbindungselement (90) beweglich an dem ersten Körper (20) in der Nähe der ersten Drehachse (R1) befestigt ist.

10. Aufhängung (10) nach einem der vorhergehenden Ansprüche, ferner umfassend ein viertes Verbindungselement (110) und ein fünftes Verbindungselement (120), wobei das vierte Verbindungselement (110) beweglich an dem ersten Körper (20) und an dem zweiten Körper (30) befestigt ist, und wobei das fünfte Verbindungselement (120) beweglich an dem ersten Körper (20) und an dem zweiten Körper (30) befestigt ist.

11. Aufhängung (10) nach einem der vorhergehenden Ansprüche, ferner umfassend ein viertes Verbindungselement (110) und ein fünftes Verbindungselement (120), wobei das vierte Verbindungselement (110) beweglich an dem ersten Körper (20) und an dem Fahrzeugkörper (50) befestigt ist, und wobei das fünfte Verbindungselement (120) beweglich an dem ersten Körper (20) und an dem Fahrzeugkörper (50) befestigt ist.

12. Aufhängung (10) nach einem der Ansprüche 1 bis 9, ferner umfassend ein viertes Verbindungselement (110), wobei das vierte Verbindungselement (110) ein Querlenker ist und beweglich an dem ersten Körper (20) und an dem Fahrzeugkörper (50) befestigt ist.

13. Fahrzeug (100), umfassend:
eine erste Aufhängung (12) nach einem der Ansprüche 1 bis 12;
eine zweite Aufhängung (14) nach einem der Ansprüche 1 bis 12;
ein erstes Rad (42), drehbar an der ersten Aufhängung (12) befestigt;
ein zweites Rad (43), drehbar an der zweiten Aufhängung (14) befestigt; und
eine Antriebseinheit (140).

14. Fahrzeug (100) nach Anspruch 13, die Antriebseinheit (140) umfassend:
einen ersten Motor (142), betriebsfähig mit dem ersten Rad (42) gekoppelt, um das erste Rad (42) anzutreiben; und
einen zweiten Motor (144), betriebsfähig mit dem zweiten Rad (44) gekoppelt, um das zweite Rad (44) anzutreiben.

15. Fahrzeug (100) nach Anspruch 13 oder 14, ferner umfassend:
eine dritte Aufhängung (16) nach einem der Ansprüche 1 bis 12;
eine vierte Aufhängung (18) nach einem der Ansprüche 1 bis 12;
ein drittes Rad (46), drehbar an der dritten Aufhängung (16) befestigt; und
ein viertes Rad (48), drehbar an der vierten Aufhängung (18) befestigt;
die Antriebseinheit (140) ferner umfassend:
einen dritten Motor (146), betriebsfähig mit dem dritten Rad (46) gekoppelt, um das dritte Rad (46) anzutreiben; und
einen vierten Motor (148), betriebsfähig mit dem vierten Rad (48) gekoppelt, um das vierte Rad (48) anzutreiben.

## Revendications

1. Suspension (10) pour un véhicule (100), la suspension (10) comprenant :
un premier corps (20) auquel une roue (40) du véhicule (100) peut être attachée de manière rotative ;
un deuxième corps (30) pouvant être attaché de manière rotative à un corps de véhicule (50) du véhicule (100), dans lequel le deuxième corps (30) peut tourner autour d'un deuxième axe de rotation (R2) ;
un actionneur (60), couplé de manière fonctionnelle au deuxième corps (30), pour entraîner la rotation du deuxième corps (30) autour du deuxième axe de rotation (R2) ;
au moins un premier élément de liaison (70) et un deuxième élément de liaison (80), dans lequel le premier élément de liaison (70) est attaché de manière mobile au premier corps (20) et au deuxième corps (30), dans lequel le deuxième élément de liaison (80) est attaché de manière mobile au premier corps (20) et au deuxième corps (30), et dans lequel le premier élément de liaison (70) et le deuxième élément de liaison (80) permettent conjointement la rotation du premier corps (20) autour d'un premier axe de rotation (R1) en réponse à une rotation du deuxième corps (30) autour du deuxième axe de rotation (R2) ; et
un troisième élément de liaison (90) attaché de manière mobile au premier corps (20) et au corps de véhicule (50) ; **caractérisée en ce que**
le premier élément de liaison (70) et le deuxième élément de liaison (80) sont adaptés pour se déplacer dans des directions opposées l'un par rapport à l'autre en réponse à la rotation du deuxième corps (30).

2. Suspension (10) selon la revendication 1, dans laquelle le deuxième corps (30) peut être attaché de manière rotative au corps de véhicule (50) en utilisant deux points de palier (PB), dans laquelle les deux points de palier (PB) définissent le deuxième axe de rotation (R2).

3. Suspension (10) selon la revendication 1, dans laquelle le deuxième corps (30) et le premier corps (20) se déplacent dans une relation coordonnée l'un par rapport à l'autre en réponse à la rotation du deuxième corps (20) autour du deuxième axe de rotation (R2).

4. Suspension (10) selon l'une des revendications précédentes, dans laquelle l'actionneur (60) peut être attaché au corps de véhicule (50).

5. Suspension (10) selon l'une des revendications précédentes, comprenant en outre un élément amortisseur à ressort (150) attaché de manière mobile au premier corps (20) et pouvant être attaché au corps de véhicule (50).

6. Suspension (10) selon l'une des revendications précédentes, comprenant en outre une transmission (130) couplant de manière fonctionnelle l'actionneur (60) au deuxième corps (30).

7. Suspension (10) selon l'une des revendications précédentes, dans laquelle le troisième élément de liaison (90) est un bras oscillant avec une forme pour permettre à la roue (40) attachée au premier corps (20) de tourner autour du premier axe de rotation (R1) sans entrer en contact avec le troisième élément de liaison (90).

8. Suspension (10) selon l'une des revendications précédentes, dans laquelle le troisième élément de liaison (90) a une forme incurvée.

9. Suspension (10) selon l'une des revendications précédentes, dans laquelle le troisième élément de liaison (90) est attaché de manière mobile au premier corps (20) à proximité du premier axe de rotation (R1).

10. Suspension (10) selon l'une des revendications précédentes, comprenant en outre un quatrième élément de liaison (110) et un cinquième élément de liaison (120), dans laquelle le quatrième élément de liaison (110) est attaché de manière mobile au premier corps (20) et au deuxième corps (30), et dans laquelle le cinquième élément de liaison (120) est attaché de manière mobile au premier corps (20) et au deuxième corps (30).

11. Suspension (10) selon l'une des revendications précédentes, comprenant en outre un quatrième élément de liaison (110) et un cinquième élément de liaison (120), dans laquelle le quatrième élément de liaison (110) est attaché de manière mobile au premier corps (20) et au corps de véhicule (50), et dans laquelle le cinquième élément de liaison (120) est attaché de manière mobile au premier corps (20) et au corps de véhicule (50).

12. Suspension (10) selon l'une des revendications 1 à 9, comprenant en outre un quatrième élément de liaison (110), dans laquelle le quatrième élément de liaison (110) est un bras de suspension à triangle et est attaché de manière mobile au premier corps (20) et au corps de véhicule (50).

13. Véhicule (100) comprenant :
une première suspension (12) selon l'une des revendications 1 à 12 ;
une deuxième suspension (14) selon l'une des revendications 1 à 12 ;
une première roue (42) attachée de manière rotative à la première suspension (12) ;
une deuxième roue (43) attachée de manière rotative à la deuxième suspension (14) ; et
une unité d'entraînement (140).

14. Véhicule (100) selon la revendication 13, dans lequel l'unité d'entraînement (140) comprend :
un premier moteur (142) couplé de manière fonctionnelle à la première roue (42) pour entraîner la première roue (42) ; et
un deuxième moteur (144) couplé de manière fonctionnelle à la deuxième roue (44) pour entraîner la deuxième roue (44).

15. Véhicule (100) selon la revendication 13 ou 14, comprenant en outre
une troisième suspension (16) selon l'une des revendications 1 à 12 ;
une quatrième suspension (18) selon l'une des revendications 1 à 12 ;
une troisième roue (46) attachée de manière rotative à la troisième suspension (16) ; et
une quatrième roue (48) attachée de manière rotative à la quatrième suspension (18) ; dans lequel
l'unité d'entraînement (140) comprend en outre
un troisième moteur (146) couplé de manière fonctionnelle à la troisième roue (46) pour entraîner la troisième roue (46) ; et
un quatrième moteur (148) couplé de manière fonctionnelle à la quatrième roue (48) pour entraîner la quatrième roue (48).
